# EUROPÄISCHE PATENTSCHRIFT

(11) **EP 0 894 062 B1**
(45) Veröffentlichungstag und Bekanntmachung des Hinweises auf die Patenterteilung: **29.12.1999**
(21) Anmeldenummer: 97923717.9
(22) Anmeldetag: 20.03.1997
(51) Int. Cl.: B62D 1/10

(54) **VORRICHTUNG FÜR DIE BEFESTIGUNG EINER NABE AUF EINER WELLE, INSBESONDERE EINER LENKRADNABE AUF EINER LENKSÄULE**
DEVICE FOR ATTACHING A HUB TO A SHAFT, IN PARTICULAR A STEERING WHEEL HUB TO A STEERING COLUMN
DISPOSITIF POUR FIXER UN MOYEU SUR UN ARBRE, NOTAMMENT UN MOYEU DE VOLANT SUR UNE COLONNE DE DIRECTION

(30) Priorität: 15.04.1996 DE 19616234
(43) Veröffentlichungstag der Anmeldung: 03.02.1999
(73) Patentinhaber: Petri AG, 63743 Aschaffenburg (DE)
(72) Erfinder: REH, Stefan, D-63939 Wörth (DE); HUNG, Hodac, D-63843 Niedernberg (DE); HOCK, Karl, D-63776 Mömbris (DE); MAROTZKE, Thomas, D-13187 Berlin (DE); GIEGERICH, Günter, D-63785 Obernburg (DE); MÜLLER, Norbert, D-63743 Aschaffenburg (DE); RETTINGER, Bruno, D-63768 Hösbach (DE)
(74) Vertreter: Bärmann, Klaus, Dipl.-Ing.
(86) Internationale Anmeldenummer: DE9700619
(87) Internationale Veröffentlichungsnummer: WO9738888

(56) Entgegenhaltungen:
- EP-A- 0 712 773
- DE-U- 9 407 807
- FR-A- 2 715 906
- FR-A- 2 724 359

## Beschreibung

Die Erfindung betrifft eine Vorrichtung für die Befestigung einer Lenkradnabe auf der Welle einer Lenksäule nach dem Oberbegriff des Anspruchs 1. Eine solche Vorrichtung ist zum Beispiel aus der FR-A-2724359 oder der FR-A-2715906 bekannt.

Es ist bekannt, Lenkräder in Kraftfahrzeugen auf die Lenksäulen aufzusetzen und von oben mittels einer Mutter oder Schraube auf diesen zu befestigen. Daneben ist aus der DE 44 15 765 A1 eine Lenkradbefestigung bekannt, bei der die Lenkradnabe ein in die Lenksäule eingreifendes Klemmelement aufweist. Die Lenksäule ist mit einer Kerbverzahnung versehen, der eine entsprechende Verzahnung in der Lenkradnabe zugeordnet ist. Für die axiale Arretierung der Lenkradnabe und damit des Lenkrades auf der Lenksäule ist im Bereich der Kerbverzahnung in der Lenkspindel eine Klemmnut vorgesehen, der ein Klemmelement in der Lenkradnabe zugeordnet ist. Dabei erstreckt sich das Klemmelement quer zur Lenksäule. Bei dieser Befestigungsart kann eine Airbageinheit vor der Befestigung des Lenkrades auf der Lenksäule am Lenkrad montiert werden kann, da das Aufschrauben der Mutter von oben entfällt.

Für die Übertragung von elektrischer Energie und von Signalen zwischen stationären Baugruppen und dem Lenkrad eines Kraftfahrzeuges sind Kontakteinheiten bekannt. Diese weisen einen an der Lenksäule befestigten Stator und einen am Lenkrad befestigten Rotor auf. Zwischen beiden verläuft ein Kabel, das sich beim Drehen des Lenkrades in Abhängigkeit von der Drehrichtung ab- bzw. aufwickelt. Der Stator und der Rotor weisen Steckkontakte auf, mittels derer sie mit der Lenksäule bzw. dem Lenkrad verbunden sind.

In der Praxis wird die Kontakteinheit bei der Montage des Lenkrades auf der Lenksäule mit montiert. Aus der Praxis ist auch bekannt, den Rotor aber auch den Stator am Lenkrad vorzumontieren. Die Montage des Lenkrades auf der Lenksäule erfolgt in einer definierten Position, vorzugsweise in der Geradeausstellung der Fahrzeugräder. Die Drehstellung der Kontakteinheit muß bei der Montage dieser definierten Position entsprechen. Deshalb ist es wünschenswert, daß die am Lenkrad vormontierte Kontakteinheit diese Position bereits aufweist und daß diese auch während der Montage aufrechterhalten wird. Das ist in der Praxis bisher nur mittels separater Teile sehr aufwendig möglich. Das gleiche gilt auch für eine Demontage.

Der Erfindung liegt die Aufgabe zugrunde, die Befestigung einer Lenkradnabe auf der Welle einer Lenksäule auch bei vormontierter Kontakteinheit am Lenkrad zu vereinfachen.

Erfindungsgemäß wird das gemäß den kennzeichnenden Merkmalen des Anspruchs 1 erreicht.

Bei einer Vorrichtung für die Befestigung einer Lenkradnabe auf der Welle einer Lenksäaule, mit einem quer in die Welle eingreifender Befestigungsmittel, wobei als Befestigungsmittel eine Schraube vorgesehen ist, die ein in die Nabe eingreifendes Kopfteil und einen Schaft aufweist, der partiell in die Nabe und partiell in die Welle eingreift, weist erfindungsgemäß bei einer an einem Lenkrad vorgesehenen Kontakteinheit mit einem am Lenkrad befestigten Rotor und einem an der Lenksäule befestigten Stator dieser einen Abschnitt auf, in den die Schraube in einer von der Lenksäule gelösten Stellung des Lenkrades eingreift.

Diese Vorrichtung weist den Vorteil auf, daß der aus dem Lenkrad ragende Abschnitt des Kopfteils bei gelöster Schraube für die Fixierung der am Lenkrad vormontierten Kontakteinheit verwendet werden kann. Damit wird die für die Montage des Lenkrades auf der Lenksäule vorgesehene Schraube zusätzlich für die Drehsicherung der Kontakteinheit genutzt. Der weitere Vorteil besteht darin, daß diese Drehsicherung gleichzeitig und zwangsläufig mit dem Lösen der Schraube von der Lenksäule erfolgt. Es ist also weder ein zusätzlicher Arbeitsgang erforderlich, noch kann dieser Vorgang des Verriegelns vergessen werden. Diese Anordnung stellt sowohl eine Transportsicherung dar, die verhindert, daß sich beim Transport des Lenkrades mit der vormontierten Kontakteinheit der Stator dreht, als auch eine Montagehilfe, die sichert, daß das Lenkrad nur in einer vorbestimmten Stellung, insbesondere in der Geradeausstellung der Räder montiert werten kann.

Es ist zweckmäßig, daß am Rand des Stators eine Ausnehmung vorgesehen ist, die eine Größe aufweist, die die Einführung der Schraube mit dem Kopfteil in die Gewindeführung des Lenkrades ermöglicht. Dabei stellt der Stator der Kontakteinheit vorzugsweise ein nach oben offenes hohlzylindrisches Teil dar, an dessen Rand als Ausnehmung für die Schraube ein Loch oder Einschnitt vorgesehen ist.

Die Schraube kann nur in die Gewindeführung des Lenkrades eingeführt werden, wenn die Kontakteinheit so gedreht ist, das die Ausnehmung mit der Gewindebohrung fluchtet. Durch Eindrehen der Schraube wird die Kontakteinheit fixiert, wobei das Eindrehen der Schraube nur bis zu einer Tiefe erfolgt, bei der noch kein Kontakt mit der Lenksäule besteht. Der Kopfteil der Schraube weist eine solche Länge auf, daß in einer Stellung, bei der Lenkrad und Lenksäule durch die Schraube fest miteinander verbunden sind, die Schraube nicht mehr in die Ausnehmung eingreift, d.h. nicht mehr mit der Kontakteinheit im Eingriff ist. Lenkrad und Kontakteinheit sind somit entriegelt und das Lenkrad und mit ihm der Rotor können gedreht werden. Andererseits ist die Länge des Kopfteils auch so gewählt, daß dieses in gelöster Stellung der Schraube sowohl in der Nabe geführt ist als auch aus dieser herausragt.

Es ist zweckmäßig, daß das Kopfteil mit einem Außengewinde versehen ist, dem in der Nabe eine Gewindeführung zugeordnet ist, daß der Schaft der Schraube anschließend an das Kopfteil einen ersten zylindrischen Abschnitt aufweist, daß sich hieran ein konischer Abschnitt für den Eingriff in zugeordnete Abschnitte der Nabe und der Welle anschließt, und daß sich an den konischen Abschnitt ein zweiter zylindrischer Abschnitt anschließt, dem eine Führung im Lenkrad zugeordnet ist. Der zweite zylindrische Abschnitt weist einen geringeren Durchmesser als der erste zylindrische Abschnitt auf.

Die der Schraube zugeordneten Abschnitte der Nabe und/oder der Welle sind als umlaufende Nut oder Aussparung ausgebildet. Weiterhin ist es zweckmäßig, daß der erste zylindrische Abschnitt einen größeren Durchmesser und der zweite zylindrische Abschnitt einen kleineren Durchmesser als die an der Welle vorgesehene Nut bzw. Aussparung aufweist.

Die Erfindung soll in Ausführungsbeispielen anhand von Zeichnungen erläutert werden. Es zeigen:
- Fig. 1: einen Schnitt durch ein Teil eines Lenkradskelettes mit verriegelter Kontakteinheit;
- Fig. 2: eine Draufsicht auf das Lenkradskelett nach Fig. 1, teilweise geschnitten;
- Fig. 3: einen Schnitt wie Fig. 1 mit entriegelter Kontakt- einheit;
- Fig. 4: eine Draufsicht auf das Lenkradskelett nach Fig. 3, teilweise geschnitten;
- Fig. 5: die Ansicht A nach Fig. 1;
- Fig. 6 bis 9: Schnitte durch das Lerkradskelett entsprechend der Linie VI-VI der Fig. 4 in unterschiedlichen Ausführungsformen.

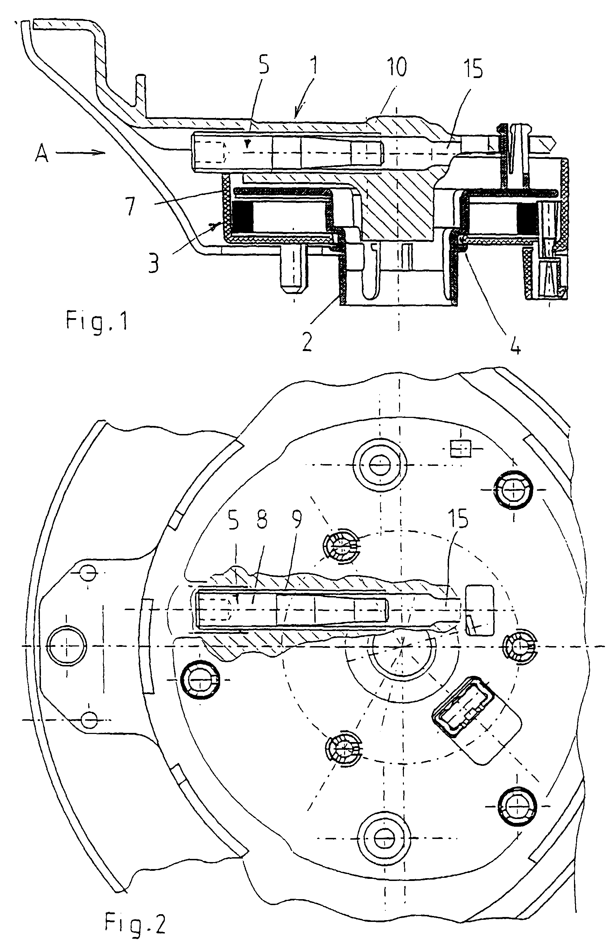

In der Fig. 1 ist ein Teil des Skeletts eines Lenkrades 1 dargestellt, mit dem ein Rotor 2 einer Kontakteinheit verbunden ist. Die Lenksäule ist in der Figur nicht dargestellt. Dem Rotor 2 ist ein Stator 3 zugeordnet, der in einer Ringnut 4 des Rotors 2 geführt ist. Diese Führung ermöglicht die Vormontage auch des Stators am Lenkrad, so daß das Lenkrad mit dem Rotor und dem Stator, d.h. mit der kompletten Kontakteinheit, an einen Fahrzeughersteller geliefert werden kann.

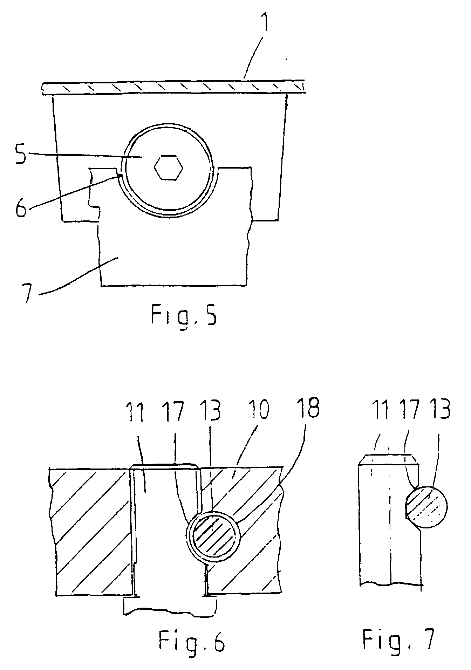

Zur Befestigung des Lenkrades 1 an der in den Figuren 1 bis 4 nicht dargestellten Lenksäule ist eine bezüglich der Lenksäule querliegende Schraube 5 vorgesehen, die in gelöster, von der Lenksäule entfernter Stellung in eine Ausnehmung 6 am Rand 7 des Stators der Kontakteinheit eingreift. Diese Bauteile sind auch in der Ansicht der Fig. 5 erkennbar. Die Schraube 5 weist ein mit einem Außengewinde versehenes Kopfteil 8 auf, wobei die Ausnehmung 6 am Rand 7 der Kontakteinheit eine Größe aufweist, die die Einführung der Schraube 5 mit dem Kopfteil 8 in eine Gewindeführung 9 des Lenkrades 1 ermöglicht. Die Schraube weist weiterhin einen Schaft auf, der nach der Befestigung des Lenkrades auf der Lenksäule mit einem Teil seines Umfangs in die Lenkradnabe 10 und mit einem anderen Teil in die Lenksäule 11 eingreift (Figuren 6 bis 9). Der Schaft der Schraube 5 weist anschließend an das Kopfteil 8 einen ersten zylindrichen Abschnitt 12 auf. An diesen schließt sich ein konischer Abschnitt 13 und an diesen ein zweiter zylindrischer Abschnitt 14 an, der einen geringeren Durchmesser als der erste zylindrische Abschnitt 12 aufweist.

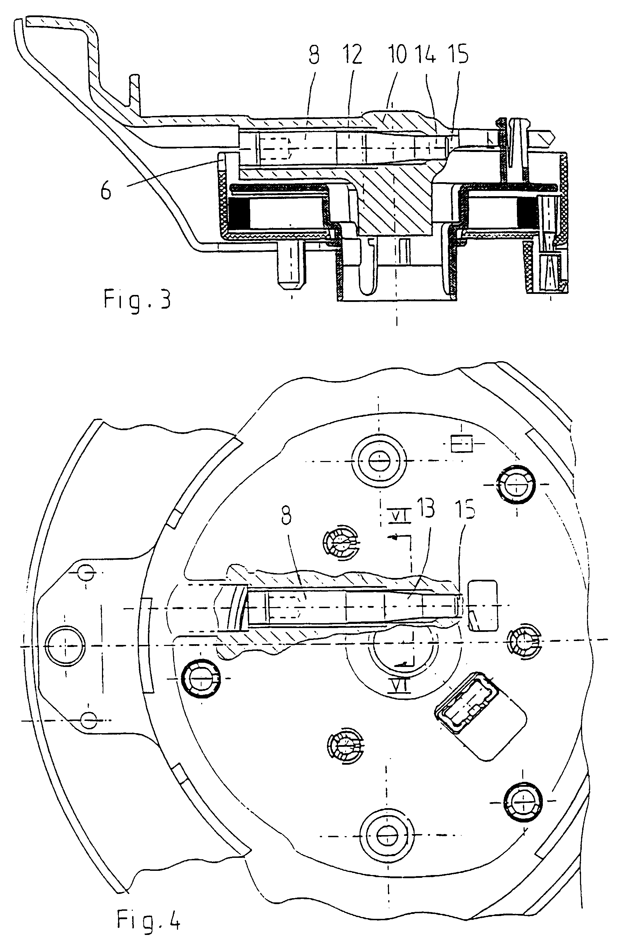

In den Figuren 1 und 2 ist die Schraube 5 in gelöster Stellung dargestellt, in der das Kopfteil 8 in die Ausnehmung 6 (Fig. 3) eingreift. Damit ist der Stator beim Transport des Lenkrades gegen Verdrehung gesichert. Auch in dieser Stellung ist das Kopfteil 8 noch in der Gewindeführung 9 des Lenkrades 1 geführt, so daß das Kopfteil 8, unabhängig von der Lage des Lenkrades beim Transport, in der Ausnehmung 6 verbleibt. Weiterhin ist bei der Montage des Lenkrades auf der Lenksäule 11 eine vorbestimmte Lage des Rotors gegenüber dem Stator gesichert.

Bei der Montage des Lenkrades auf der Lenksäule wird die Schraube 5 angezogen. Dabei wird das Kopfteil 8 über den Rand 7 nach innen bewegt, so daß die Drehsicherung aufgehoben wird. Der Rotor kann sich deshalb bei Drehung des Lenkrades gegenüber dem Stator 3 drehen, der an der Lenksäule 11 befestigt ist. In der in den Figuren 3 und 4 dargestellten montierten Lage des Lenkrades auf der Lenksäule greift der konische Abschnitt 13 der Schraube 5 in der in Fig. 6 dargestellten Weise in die Lenkradnabe 10 und in die Lenksäule 11 ein. Der zweite zylindrische Abschnitt 14 greift in eine zylindrische Ausnehmung 15 ein, wodurch die Schraube 5 zusätzlich geführt ist.

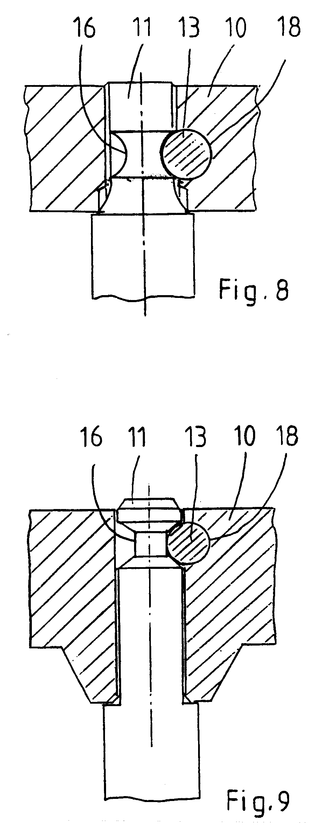

Die Verbindung zwischen der Lenkradnabe 10 und der Lenksäule 11 ist auch aus den Figuren 6 bis 9 ersichtlich. Bei den Ausführungsformen der Figuren 6 und 7 weist die Lenksäule 11 eine Aussparung 17 auf, der eine Aussparung 18 in der Lenkradnabe 10 gegenüberliegt. Zwischen beide Aussparungen greift beim Einschrauben der Schraube 5 deren konischer Abschnitt 13 ein. Die Aussparung 17 kann sowohl einen runden Querschnitt aufweisen, wie es in Fig. 6 dargestellt ist, als auch einen mehreckigen Querschnitt, wie es in Fig. 7 dargestellt ist. In den Ausführungsbeipielen der Figuren 8 und 9 weist die Lenksäule 11 eine umlaufende Nut 16 auf, der in der Lenkradnabe 10 eine Nut 18 zugeordnet ist. In diese Nut greift einseitig der konische Abschnitt 13 ein, der auch in die Nut 18 eingreift. Auch die umlaufende Nut 16 kann sowohl einen runden Querschnitt (Fig. 8) als auch einen mehreckigen Querschnitt (Fig. 9) aufweisen.

## Patentansprüche

1. Vorrichtung für die Befestigung einer Lenkradnabe auf der Welle einer Lenksäule, mit einem quer in die Welle eingreifenden Befestigungsmittel, wobei als Befestigungsmittel eine Schraube vorgesehen ist, die ein in die Nabe eingreifendes Kopfteil und einen Schaft aufweist, der partiell in die Nabe und partiell in die Welle eingreift,
**dadurch gekennzeichnet,**
daß bei einer an einem Lenkrad (1) vorgesehenen Kontakteinheit mit einem am Lenkrad befestigten Rotor (2) und einem an der Lenksäule befestigten Stator (3) dieser einen Abschnitt aufweist, in den die Schraube (5) in einer von der Lenksäule gelösten Stellung des Lenkrades eingreift.

2. Vorrichtung nach Anspruch 1, **dadurch gekennzeichnet,** daß am Rand (7) des Stators (3) eine Ausnehmung (5) vorgesehen ist, die eine Größe aufweist, die die Einführung der Schraube (5) mit dem Kopfteil (8) in die Gewindeführung (9) des Lenkrades (1) ermöglicht.

3. Vorrichtung nach Anspruch 1 oder 2, **dadurch gekennzeichnet,** daß der Stator (3) der Kontakteinheit ein nach oben offenes hohlzylindrisches Teil darstellt, an dessen Rand (7) als Ausnehmung für die Schraube (5) ein Loch oder Einschnitt (6) vorgesehen ist.

4. Vorrichtung nach mindestens einem der vorhergehenden Ansprüche, **dadurch gekennzeichnet,** daß das Kopfteil (8) eine solche Länge aufweist, daß es in gelöster Stellung der Schraube (5) sowohl in der Nabe (10) geführt ist als auch aus dieser herausragt.

5. Vorrichtung nach mindestens einem der vorhergehenden Ansprüche, **dadurch gekennzeichnet,** daß das Kopfteil (8) mit einem Außengewinde versehen ist, dem in der Nabe (10) eine Gewindeführung (9) zugeordnet ist, daß der Schaft der Schraube anschließend an das Kopfteil (8) einen ersten zylindrischen Abschnitt (12) aufweist, daß sich hieran ein konischer Abschnitt (13) für den Eingriff in zugeordnete Abschnitte der Nabe (10) und der Welle (11) anschließt, und daß sich an den konischen Abschnitt (13) ein zweiter zylindrischer Abschnitt (14) anschließt, dem eine Führung (15) im Lenkrad zugeordnet ist.

6. Vorrichtung nach mindestens einem der vorhergehenden Ansprüche, **dadurch gekennzeichnet,** daß der zweite zylindrische Abschnitt (14) einen geringeren Durchmesser als der erste zylindrische Abschnitt (12) aufweist.

7. Vorrichtung nach mindestens einem der vorhergehenden Ansprüche, **dadurch gekennzeichnet**, daß die der Schraube (5) zugeordneten Abschnitte der Nabe und/oder der Welle als umlaufende Nut (16) oder Aussparung (17, 18) ausgebildet sind.

8. Vorrichtung nach mindestens einem der vorhergehenden Ansprüche, **dadurch gekennzeichnet,** daß der erste zylindrische Abschnitt (12) einen größeren Durchmesser und der zweite zylindrische Abschnitt (14) einen kleineren Durchmesser als die an der Welle (11) vorgesehene Nut (16) bzw. Aussparung (17) aufweist.

## Claims

1. Device for attaching a steering wheel hub to the shaft of a steering column, with fastening means engaging transversely into the shaft wherein a screw is provided as the fastening means and has a head part engaging in the hub and a shaft part engaging partially in the hub and partially in the shaft,
**characterised in that**
in the case of a contact unit provided on the steering wheel (1) and having a rotor (2) fixed on the steering wheel and a stator (3) fixed on the steering column the stator (3) has a section in which the screw (5) engages when the steering wheel is released from the steering column.

2. Device according to claim 1 **characterised in that** on the edge (7) of the stator (3) there is a recess (6) which has a size allowing the screw (5) to be inserted by the head part (8) into the threaded guide (9) of the steering wheel (1).

3. Device according to claim 1 or 2 **characterised in that** the stator (3) of the contact unit represents a hollow cylindrical part which is open to the top and on whose edge (7) a hole or incision (6) is provided as the recess for the screw (5).

4. Device according to at least one of the preceding claims **characterised in that** the head part (8) has such a length that when the screw (5) is in the released position the head part is both guided in the hub (10) and projects out from same.

5. Device according to at least one of the preceding claims **characterised in that** the head part (8) is provided with an external thread associated with a threaded guide (9) in the hub (10), that the shaft part of the screw adjoining the head part (8) has a first cylindrical section (12), that this is adjoined by a conical section (13) for engaging in the associated sections of the hub (10) and shaft (11), and that the conical section (13) is adjoined by a second cylindrical section (14) which is associated with a guide (15) in the steering wheel.

6. Device according to at least one of the preceding claims **characterised in that** the second cylindrical section (14) has a smaller diameter than the first cylindrical section (12).

7. Device according to at least one of the preceding claims **characterised in that** the sections of the hub associated with the screw (5) and/or of the shaft are formed as a circumferential groove (16) or recess (17,18).

8. Device according to at least one of the preceding claims **characterised in that** the first cylindrical section (12) has a larger diameter and the second cylindrical section (14) has a smaller diameter than the groove (16) or recess (17) provided on the shaft (11).

## Revendications

1. Dispositif pour la fixation d'un moyeu de volant sur l'arbre d'une colonne de direction, comprenant des moyens de fixation qui s'engagent perpendiculairement dans l'arbre, et dans lequel il est prévu en tant que moyens de fixation une vis qui comprend une partie de tête qui s'engage dans le moyeu et un fût qui s'engage partiellement dans le moyeu et partiellement dans l'arbre,
caractérisé en ce que
dans une unité de contact prévue sur le volant (1) et comprenant un rotor (2) fixé sur le volant et un stator (3) fixé sur la colonne de direction, ledit stator comporte un tronçon dans lequel s'engage la vis (5) dans une position du volant détachée de la colonne de direction.

2. Dispositif selon la revendication 1, caractérisé en ce qu'il est prévu un évidement (6) à la bordure (7) du stator (3), ledit évidement ayant une taille qui permet l'introduction de la vis (5) avec la partie de tête (8) dans le guidage à pas de vis (9) du volant (1).

3. Dispositif selon l'une ou l'autre des revendications 1 et 2, caractérisé en ce que le stator (3) de l'unité de contact représente une partie cylindrique creuse ouverte vers le haut, à la bordure (7) de laquelle est prévu un trou ou une découpe (6) à titre d'évidement pour la vis (5).

4. Dispositif selon l'une au moins des revendications précédentes, caractérisé en ce que la partie de tête (8) a une longueur telle que, dans la position libérée de la vis (5), elle est à la fois guidée dans le moyeu (10) et dépasse également hors de celui-ci.

5. Dispositif selon l'une au moins des revendications précédentes, caractérisé en ce que la partie de tête (8) est pourvue d'un filetage, auquel est associé un guidage taraudé (9) dans le moyeu (10), en ce que le fût de la vis présente à la suite de la partie de tête (8) un premier tronçon cylindrique (12), en ce que celui-ci est suivi par un tronçon conique (13) destiné à s'engager dans des tronçons associés du moyeu (10) et de l'arbre (11), et en ce que le tronçon conique (13) est suivi par un deuxième tronçon cylindrique (14), auquel est associé un guidage (15) dans le volant.

6. Dispositif selon l'une au moins des revendications précédentes, caractérisé en ce que le deuxième tronçon cylindrique (14) a un diamètre inférieur à celui du premier tronçon cylindrique (12).

7. Dispositif selon l'une au moins des revendications précédentes, caractérisé en ce que les tronçons du moyeu et/ou de l'arbre associés à la vis sont réalisés sous forme d'une gorge (16) ou d'un évidement (17, 18) périphérique.

8. Dispositif selon l'une au moins des revendications précédentes, caractérisé en ce que le premier tronçon cylindrique (12) a un diamètre supérieur, et le deuxième tronçon cylindrique (14) a un diamètre inférieur à celui d'une gorge (16) ou d'un évidement (17) prévu sur l'arbre (11).
